# EUROPÄISCHE PATENTSCHRIFT

(11) **EP 1 724 551 B1**
(45) Veröffentlichungstag und Bekanntmachung des Hinweises auf die Patenterteilung: **30.06.2010**
(21) Anmeldenummer: 06111174.6
(22) Anmeldetag: 15.03.2006
(51) Int. Cl.: G01C 19/00, G01C 19/56

(54) **Halterungsanordnung**
Holder system
Agencement de support

(30) Priorität: 14.04.2005 DE 102005017333
(43) Veröffentlichungstag der Anmeldung: 22.11.2006
(73) Patentinhaber: Continental Automotive GmbH, 30165 Hannover (DE)
(72) Erfinder: Becker, Ronald, 35641, Schöffengrund (DE)

(56) Entgegenhaltungen:
- EP-A- 1 510 782
- JP-A- 10 267 660
- JP-A- 2002 022 452

## Beschreibung

Die Erfindung bezieht sich auf eine Halterungsanordnung zum Haltern eines Drehratensensors, insbesondere eines Gyrosensors, an einem mit einem Fahrzeug fest verbundenen plattenartigen Träger, mit einem Gehäuse, in dem der Drehratensensor angeordnet ist und das um eine zur Ebene des Trägers senkrechte Drehachse drehbar an dem Träger angeordnet ist, mit einem Kupplungsteil, das einen durch eine zur Drehachse koaxiale Bohrung des Trägers hindurchragenden Achsbolzen aufweist, der in der Bohrung um die Drehachse drehbar geführt und an seinem einen Ende mit einem radialen sich erweiternden Abstützteil an der einen Seitenfläche des Trägers axial abgestützt ist und an dessen anderem Ende das Gehäuse drehfest befestigt und an der zweiten Seitenfläche des Trägers axial abgestützt ist.

Bei derartigen Halterungsanordnungen ist es bekannt, diese durch Verdrehen so einstellen zu können, dass der darin anzuordnende Drehratensensor sehr genau lotrecht bzw. mit fest vorgegebener Ausrichtung in Bezug auf die Erdschwerkraft angebracht werden kann. Dabei ist der Drehratensensor vorzugsweise ein Teil einer Navigationseinrichtung in einem Kraftfahrzeug.

Aus der EP 1 510 782 A1 ist ein Drehratensensor bekannt, dessen Halter auf einem Träger mittels eines Klebemittels befestigt ist. Die Befestigung mittels Schraubverbindungen in einem Träger, wobei der Träger mehrere unterschiedliche Gleitführungen für den Drehratensensor aufweist, ist aus der JP-A-10 267660 bekannt, während die JP-A-2002 022452 eine Befestigung eines Oszillators über mehrere, mehrfach abgewinkelte Halteelemente, die mit einem Träger verschweißt sind, vorschlägt.

Aufgabe der Erfindung ist es eine Halterungsanordnung der eingangs genannten Art zu schaffen, die aus wenigen, einfachen Bauteilen besteht und eine schnelle einfache Montage des Drehratensensors ermöglicht.

Diese Aufgabe wird erfindungsgemäß dadurch gelöst, dass der Achsbolzen mit einer quer zur Drehachse hervorragenden Erweiterung an seinem dem Gehäuse zugewandten Endbereich ausgebildet und quer zur Drehachse in eine Ausnehmung in einer Wand des Gehäuses den Rand der Ausnehmung auf der dem Träger abgewandten Seite der Wand hintergreifend einführbar ist, wobei die Ausnehmung quer zur Drehachse eine Einführöffnung besitzt und das Gehäuse axial zur Drehachse federnd an dem Träger abgestützt ist.

Durch diese Ausbildung ist der Drehratensensor durch einfache Steckmontage einbaubar, wobei er unempfindlich gegen Schwingungen und Stößen gehalten wird.

Ein einziger Drehratensensor kann auf einfache Weise in unterschiedliche Einbauwinkel eingebaut und in seine vorgeschriebene Einbaulage eingestellt werden.

Zur einfachen Steckmontage kann die Ausnehmung ein zu einem Seitenrand des Gehäuses offener Schlitz sein, wobei zur Sicherung in der Einbaulage der Achsbolzen in seiner Einbaulage in der Ausnehmung arretierbar sein kann.

Eine zwangsläufige Arretierung ohne speziell zu montierende Bauteile wird dadurch erreicht, dass das Gehäuse im Bereich der Einführöffnung eine in die Ausnehmung ragende Rastzunge besitzt, die bei Einführen des Achsbolzens in die Ausnehmung von dem Achsbolzen federnd aus dem Bereich der Ausnehmung auslenkbar ist.

Einfach herstellbar und nur geringes Gewicht aufweisend ist es, wenn das Gehäuse ein Blech-/ Biegeteil ist.

Dabei kann ohne ein separates Bauteil benötigend die Rastzunge einteilig mit dem Gehäuse ausgebildet sein.

Zur Vermeidung von Schwingungen und Stößen des Drehratensensors relativ zu dem Träger können sich von dem Gehäuse Federarme zu dem Träger erstrecken und mit ihren freien Enden unter Vorspannung an dem Träger in Anlage sein, die vorzugsweise auch einteilig mit dem Gehäuse ausgebildet sein können.

Zur Erzeugung einer zwar sicheren aber trotzdem ausreichend weichen Federung können die Federarme sich unter einem Winkel zur Drehachse geneigt zu dem Träger erstrecken.

Zur einfachen Herstellung kann die sich quer zur Drehachse hervorragende Erweiterung des Achsbolzens durch eine sich quer zur Drehachse erstreckende Tangentialnut in der radial umlaufenden Mantelfläche des Achsbolzens gebildet sein.

Besitzt die Tangentialnut eine größere Breite als die Wandstärke des Gehäuses, so ist in einem bestimmten Umfang eine freie Axialbewegung des Gehäuses möglich.

Wenn der Schlitz zumindest einen sich quer zur Drehachse erstreckenden Wandbereich besitzt, an dem der Boden der Tangentialnut in der Einbaulage des Achsbolzens in Anlage ist, so wird auf einfache Weise eine Verdrehsicherung des Achsbolzens erreicht.

Der Achsbolzen kann parallel zueinander zwei Tangentialnuten besitzen, um eine Erhöhung der Drehsicherheit des Achsbolzens zu erreichen.

Zum Einstellen des Gehäuses und damit des Drehratensensors in seine Sollstellung, kann das Abstützteil des Achsbolzens an seiner dem Träger abgewandten Seite eine Stellausnehmung zur Aufnahme eines Stellwerkzeugs besitzen, wobei die Stellausnehmung ein sich quer zur Drehachse erstreckender Schlitz zur Aufnahme eines Schraubendrehers sein kann.

Diese Sollstellung kann dadurch einfach eingestellt werden, dass peripher zum Abstützteil auf der ersten Seite des Trägers eine Winkelskala angeordnet ist.

Ist das Gehäuse mit dem Drehratensensor auf einer Leiterplatte angeordnet, die einen Steckanschluss zum Kontaktieren des Drehratensensors trägt, wobei auf der Leiterplatte angeordnete Leiterbahnen von dem Drehratensensor zu dem Steckanschluss führen, so können diese Bauteile zu einer Sensorbaueinheit vormontiert und dann erst an ihrem Bestimmungsort angebracht werden.

Ein Ausführungsbeispiel der Erfindung ist in der Zeichnung dargestellt und wird im Folgenden näher beschrieben. Es zeigen:

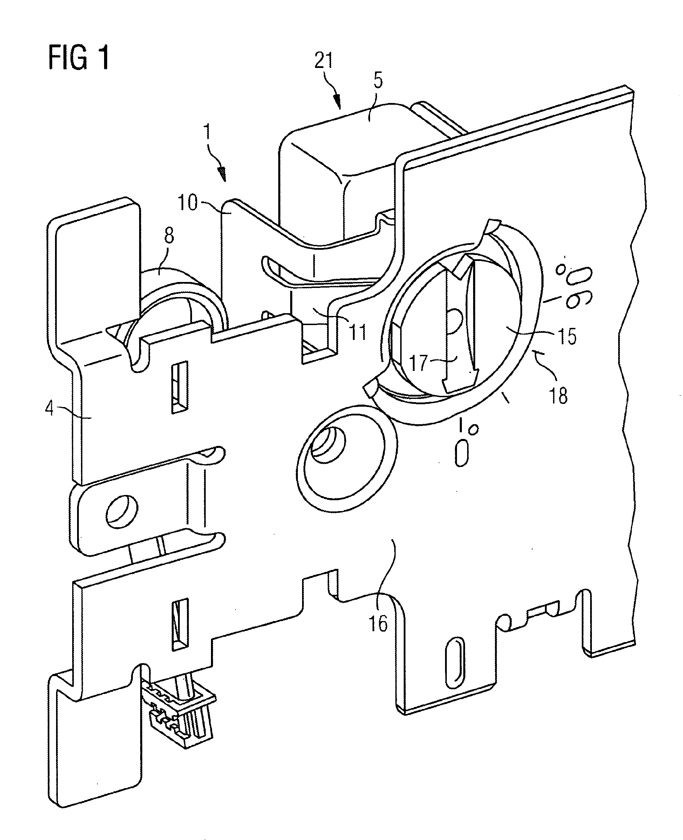

- Figur 1: eine perspektivische Vorderansicht einer einen Gyrosensor tragenden Halterungsanordnung an einem Träger,

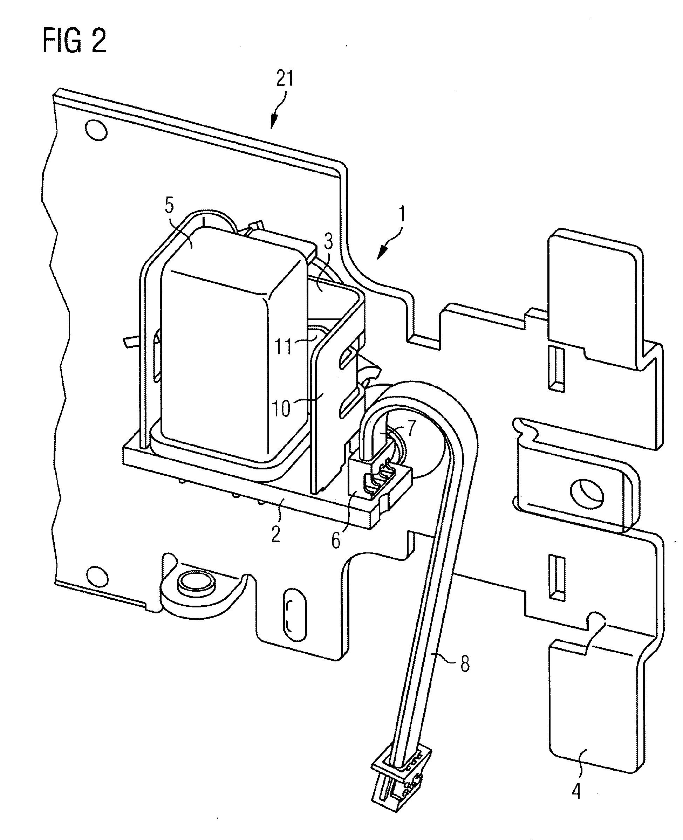

- Figur 2: eine perspektivische Rückansicht der Halteanord- nung nach Figur 1,

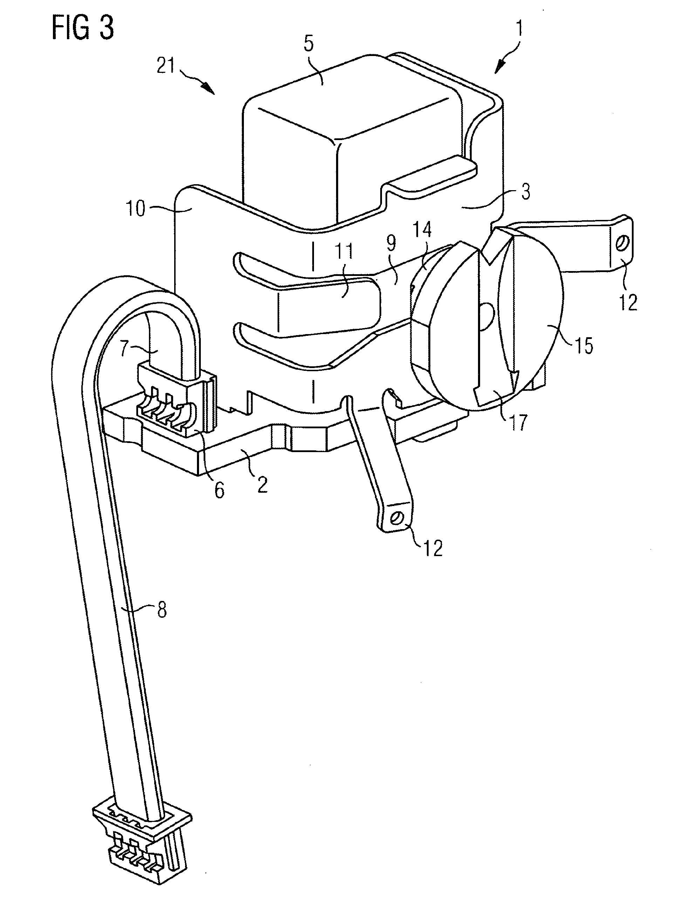

- Figur 3: eine perspektivische Vorderansicht der den Gyro- sensor tragenden Halterungsanordnung nach Figur 1 ohne Träger,

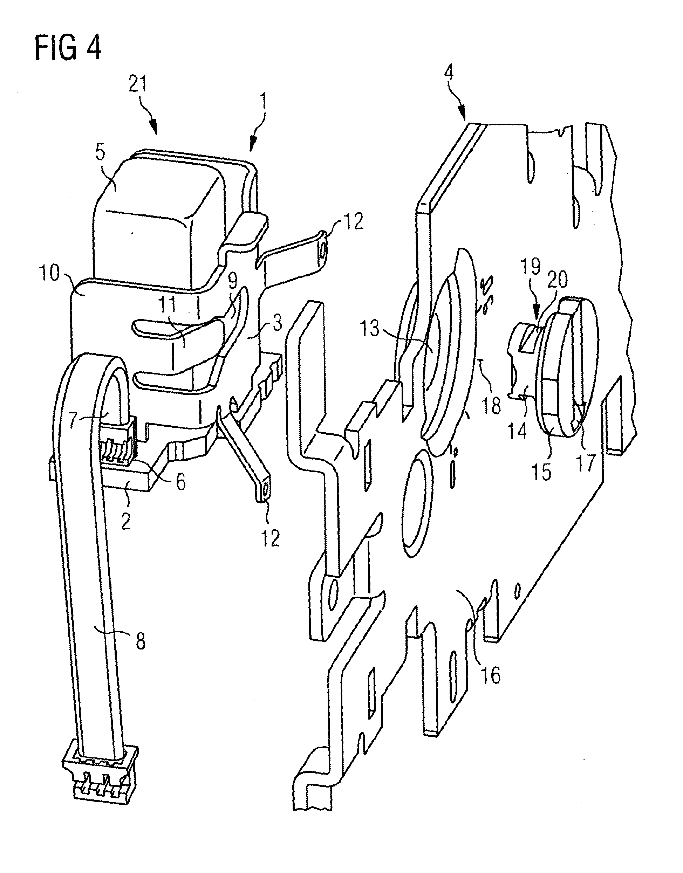

- Figur 4: eine Explosionsdarstellung in der Vorderansicht der Halterungsanordnung nach Figur 1,

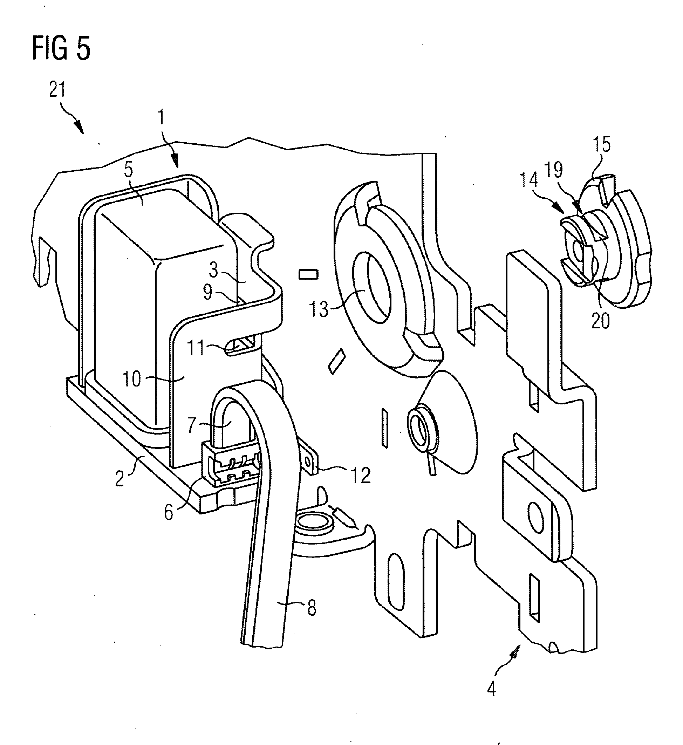

- Figur 5: eine Explosionsdarstellung in der Rückansicht der Halterungsanordnung nach Figur 1.

Die in Figuren dargestellte Halterungsanordnung besitzt ein U-förmig als Blech-/Biegeteil ausgebildetes Gehäuse 1, das auf einer Leiterplatte 2 angeordnet ist. Dabei ist der Boden 3 des "U" einem dazu parallelen plattenartigen Träger 4 zugewandt, der fest in einem Kraftfahrzeug angeordnet ist.

Innerhalb der Öffnung des "U" des Gehäuses 1 befindet sich ein Gyrosensor 5, der auf der Leiterplatte 2 befestigt und mit nicht dargestellten Leiterbahnen der Leiterplatte 2 kontaktiert ist.

Diese Leiterbahnen führen zu einem außerhalb des Gehäuses 1 auf der Leiterplatte 2 angeordneten Steckanschluss 6, in dem die Kabelkontakte 7 einer Anschlussleitung 8 verlötet sind.

Das Gehäuse 1 besitzt in dem Boden 3 einen zu einem Seitenrand des Gehäuses 1 offenen Schlitz, der sich über diesen einen Seitenrand hinaus in seiner Breite sich erweiternd bis in einen Seitenschenkel 10 des "U" des Gehäuses 1 erstreckt.

Bei dem Ausstanzen des Schlitzes 9 wurde an dessen sich in den Seitenschenkel 10 erstreckenden Ende eine Rastzunge 11 mit ausgestanzt, die sich in Längserstreckungsrichtung des Schlitzes 9 in diesem erstreckt und beim Biegen des Gehäuses 1 derart in den Schlitz 9 im Boden 3 ragend zur Funktion der Rastzunge 11 abgebogen wurde.

Ebenfalls beim Stanzbiegen des Gehäuses 1 wurden Federarme 12 erzeugt, die sich unter einem von 90° abweichenden Winkel zum Träger 4 erstrecken und diesen mit ihren freien Enden abstützen.

In dem Träger 4 ist eine durchgehende Bohrung 13 ausgebildet, durch die ein zylindrischer Achsbolzen 14 hindurchragt und drehbar geführt ist, der an seinem auf der dem Gehäuse 1 gegenüberliegenden Seite des Trägers 4 befindlichen Ende ein sich gegenüber der Bohrung 13 radial erstreckendes Abstützteil 15 besitzt. Das Abstützteil 15 stützt sich axial an der dem Gehäuse 1 abgewandten Seitenfläche 16 des Trägers 4 ab.

In einem sich quer zur Längsachse des Achsbolzens 14 erstreckenden Schlitz 17 an der Stirnseite des Abstützteils 15 kann ein Schraubendreher eingeführt und der Achsbolzen 14 um seine Längsachse gedreht werden.

Eine peripher zum Abstützteil 15 auf der Seitenfläche 16 des Trägers 4 angeordnete Winkelskala 18 erlaubt es, die eingestellte Position des Achsbolzens 14 zu erfassen.

An seinem dem Gehäuse 1 zugewandten Endbereich besitzt der Achsbolzen 14 parallel zueinander zwei Tangentialnuten 19, die sich quer zur Längsachse des Achsbolzens 14 erstreckend in der radial umlaufenden Mantelfläche des Achsbolzens 14 ausgebildet sind.

Der Abstand zwischen den Böden 20 der Tangentialnuten 19 entspricht der Breite des Schlitzes 9, während die Breite der Tangentialnuten 19 größer ist als die Wandstärke des Bodens 3 des Gehäuses 1.

Zur Montage der aus Gehäuse 1, Leiterplatte 2 und Gyrosensor 5 vormontierten Sensorbaueinheit 21 wird der Achsbolzen 14 durch die Bohrung 13 hindurchgeführt.

Danach erfolgt quer zur Längsachse des Achsbolzens 14 ein Einführen des dem Abstützteil 15 entgegen gesetzten Endes des Achsbolzens 14 mit den Tangentialnuten 19 in den Schlitz 9.

Dabei wird zunächst die Rastzunge 11 von dem Ende des Achsbolzens 14 federnd aus dem Bereich des Schlitzes 9 ausgelenkt, um dann, wenn der Achsbolzen 14 die Rastzunge 11 passiert hat, wieder in den Bereich des Schlitzes 9 hineinzufedern und ein selbsttätiges Herausbewegen des Achsbolzens 14 aus dem Schlitz 9 zu blockieren.

Die Federarme 12 stützen sich nun mit ihren freien Enden unter Vorspannung an dem Träger 4 ab, so dass der Boden 3 des Gehäuses 1 im Randbereich des Schlitzes 9 gegen die dem freien Ende des Achsbolzens 14 näheren Seitenwände der Tangentialnuten 19 beaufschlagt und das Abstützteil 15 gegen die Seitenfläche 16 des Trägers 4 verspannt wird.

Damit ist die Sensorbaueinheit 21 montiert.

Durch Einführen eines Schraubendrehers in den Schlitz 17 kann nun der Achsbolzen 14 und über die an dem Boden 20 der Tangentialnuten 19 anliegenden Seitenwände des Schlitzes 9 auch die Sensorbaueinheit 21 in eine gewünschte Lage um die Längsachse des Achsbolzens 14 geschwenkt werden.

## Patentansprüche

1. Halterungsanordnung zum Haltern eines Drehratensensors, insbesondere eines Gyrosensors (5), an einem mit einem Fahrzeug fest verbundenen plattenartigen Träger (4), mit einem Gehäuse (1), in dem der Drehratensensor angeordnet ist und das um eine zur Ebene des Trägers (4) senkrechte Drehachse drehbar an dem Träger (4) angeordnet ist, mit einem Kupplungsteil, das einen durch eine zur Drehachse koaxiale Bohrung (13) des Trägers (4) hindurchragenden Achsbolzen (14) aufweist, der in der Bohrung (13) um die Drehachse drehbar geführt und an seinem einen Ende mit einem radialen sich erweiternden Abstützteil (15) an der einen Seitenfläche des Trägers (4) axial abgestützt ist und an dessen anderem Ende das Gehäuse (1) drehfest befestigt und an der zweiten Seitenfläche des Trägers (4) axial abgestützt ist, **da** - **durch gekennzeichnet**, dass der Achsbolzen (14) mit einer quer zur Drehachse hervorragenden Erweiterung an seinem dem Gehäuse (1) zugewandten Endbereich ausgebildet und quer zur Drehachse in eine Ausnehmung (9) in einer Wand des Gehäuses (1) den Rand der Ausnehmung (9) auf der dem Träger (4) abgewandten Seite der Wand hintergreifend einführbar ist, wobei die Ausnehmung (9) quer zur Drehachse eine Einführöffnung besitzt und das Gehäuse (1) axial zur Drehachse federnd an dem Träger (4) abgestützt ist.

2. Halterungsanordnung nach Anspruch 1, **dadurch gekennzeichnet**, das die Ausnehmung ein zu einem Seitenrand des Gehäuses (1) offener Schlitz (9) ist.

3. Halterungsanordnung nach einem der vorhergehenden Ansprüche, **dadurch gekennzeichnet, dass** der Achsbolzen (14) in seiner Einbaulage in der Ausnehmung arretierbar ist.

4. Halterungsanordnung nach Anspruch 3, **dadurch gekennzeichnet, dass** das Gehäuse (1) im Bereich der Einführöffnung eine in die Ausnehmung ragende Rastzunge (11) besitzt, die bei Einführen des Achsbolzens (14) in die Ausnehmung von dem Achsbolzen (14) federnd aus dem Bereich der Ausnehmung auslenkbar ist.

5. Halterungsanordnung nach einem der vorhergehenden Ansprüche, **dadurch gekennzeichnet, dass** das Gehäuse (1) ein Blech-/Biegeteil ist.

6. Halterungsanordnung nach den Ansprüchen 4 und 5, **dadurch gekennzeichnet, dass** die Rastzunge (11) einteilig mit dem Gehäuse (1) ausgebildet ist.

7. Halterungsanordnung nach Anspruch 5, **dadurch gekennzeichnet, dass** sich von dem Gehäuse (1) Federarme (12) zu dem Träger (4) erstrecken und mit ihren freien Enden unter Vorspannung an dem Träger (4) in Anlage sind.

8. Halterungsanordnung nach Anspruch 7, **dadurch gekennzeichnet, dass** die Federarme (12) sich unter einem Winkel zur Drehachse geneigt zu dem Träger (4) erstrecken.

9. Halterungsanordnung nach einem der vorhergehenden Ansprüche, **dadurch gekennzeichnet, dass** die sich quer zur Drehachse hervorragende Erweiterung des Achsbolzens (14) durch eine sich quer zur Drehachse erstreckende Tangentialnut (19) in der radial umlaufenden Mantelfläche des Achsbolzens (14) gebildet ist.

10. Halterungsanordnung nach Anspruch 9, **dadurch gekennzeichnet, dass** die Tangentialnut (19) eine größere Breite als die Wandstärke des Gehäuses (1) besitzt.

11. Halterungsanordnung nach einem der Ansprüche 2 bis 10, **dadurch gekennzeichnet, dass** der Schlitz (9) zumindest einen sich quer zur Drehachse erstreckenden Wandbereich besitzt, an dem der Boden (20) der Tangentialnut (19) in der Einbaulage des Achsbolzens (14) in Anlage ist.

12. Halterungsanordnung nach den Ansprüchen 9 bis 11, **dadurch gekennzeichnet, dass** der Achsbolzen (14) parallel zueinander zwei Tangentilanuten (19) besitzt.

13. Halterungsanordnung nach einem der vorhergehenden Ansprüche, **dadurch gekennzeichnet, dass** das Abstützteil (15) des Achsbolzens (14) an seiner dem Träger (4) abgewandten Seite eine Stellausnehmung zur Aufnahme eines Stellwerkzeugs besitzt.

14. Halterungsanordnung nach Anspruch 13, **dadurch gekennzeichnet, dass** die Stellausnehmung ein sich quer zur Drehachse erstreckender Schlitz (17) zur Aufnahme eines Schraubendrehers ist.

15. Halterungsanordnung nach einem der vorhergehenden Ansprüche, **dadurch gekennzeichnet, dass** peripher zum Abstützteil (15) auf der ersten Seite des Trägers (4) eine Winkelskala (18) angeordnet ist.

16. Halterungsanordnung nach einem der vorhergehenden Ansprüche, **dadurch gekennzeichnet, dass** das Gehäuse (1) mit dem Drehratensensor auf einer Leiterplatte (2) angeordnet ist, die einen Steckanschluss (6) zum Kontaktieren des Drehratensensors trägt, wobei auf der Leiterplatte (2) angeordnete Leiterbahnen von dem Drehratensensor zu dem Steckanschluss (6) führen.

## Claims

1. Holder arrangement for holding a rate-of-rotation sensor, in particular a gyro sensor (5), on a plate-like carrier (4) firmly connected to a vehicle, comprising a housing (1) in which the rate-of-rotation sensor is arranged and that can rotate about a rotational axis perpendicular to the plane of the carrier (4), and comprising a coupling part which has an axle bolt (14) which projects through a bore (13), coaxial with the rotation axis, of the carrier (4), is guided rotatably about the rotation axis in the bore (13), and is axially supported at one end with the aid of a radially expanding support part (15) on one lateral surface of the carrier (4) and at whose other end the housing (1) is fastened securely against rotation and is axially supported at the second lateral surface of the carrier (4), **characterized in that** the axle bolt (14) is designed with an expansion projecting transverse to the rotation axis at its end region facing the housing (1), and can be inserted transverse to the rotation axis into a cutout (9) in a wall of the housing (1) in a fashion gripping the edge of the cutout (9) on the side of the wall averted from the carrier (4), the cutout (9) having an insertion opening transverse to the rotation axis, and the housing (1) being supported axially in relation to the rotation axis in a spring-loaded fashion on the carrier (4).

2. Holder arrangement according to Claim 1, **characterized in that** the cutout is a slot (9) open toward a lateral edge of the housing (1).

3. Holder arrangement according to one of the preceding claims, **characterized in that** the axle bolt (14) can be locked in its installed position in the cutout.

4. Holder arrangement according to Claim 3, **characterized in that** in the region of the insertion opening the housing (1) has a latching tongue (11) which projects into the cutout and can be deflected from the axle bolt (14) out of the region of the cutout in a spring-loaded fashion upon insertion of the axle bolt (14) into the cutout.

5. Holder arrangement according to one of the preceding claims, **characterized in that** the housing (1) is a sheet-metal/bent part.

6. Holder arrangement according to Claims 4 and 5, **characterized in that** the latching tongue (11) is designed as one part with the housing (1).

7. Holder arrangement according to Claim 5, **characterized in that** spring arms (12) extend from the housing (1) to the carrier (4) and bear against the carrier (4) with their free ends in a pretensioned fashion.

8. Holder arrangement according to Claim 7, **characterized in that** the spring arms (12) extend to the carrier (4) in a fashion inclined at an angle to the rotation axis.

9. Holder arrangement according to one of the preceding claims, **characterized in that** the expansion of the axle bolt (14) projecting transverse to the rotation axis is formed by a tangential groove (19), extending transverse to the rotation axis, in the radially encircling lateral surface of the axle bolt (14).

10. Holder arrangement according to Claim 9, **characterized in that** the tangential groove (19) is of greater width than the wall thickness of the housing (1).

11. Holder arrangement according to one of Claims 2 to 10, **characterized in that** the slot (9) has at least one wall region which extends transverse to the rotation axis and against which the base (20) of the tangential groove (19) bears in the installed position of the axle bolt (14).

12. Holder arrangement according to Claims 9 to 11, **characterized in that** the axle bolt (14) has two mutually parallel tangential grooves (19).

13. Holder arrangement according to one of the preceding claims, **characterized in that** on its side averted from the carrier (4) the support part (15) of the axle bolt (14) has an adjusting cutout for accepting an adjusting tool.

14. Holder arrangement according to Claim 13, **characterized in that** the adjusting cutout is a slot (17), extending transverse to the rotation axis, for accepting a screwdriver.

15. Holder arrangement according to one of the preceding claims, **characterized in that** an angle scale (18) is arranged peripherally in relation to the support part (15) on the first side of the carrier (4).

16. Holder arrangement according to one of the preceding claims, **characterized in that** the housing (1) is arranged with the rate-of-rotation sensor on a printed circuit board (2) which bears a connector (6) for making contact with the rate-of-rotation sensor, conductor tracks arranged on the printed circuit board (2) leading from the rate-of-rotation sensor to the connector (6).

## Revendications

1. Système de fixation permettant de fixer un détecteur de vitesse de rotation, notamment un détecteur gyroscopique (5), sur un support (4) en forme de plaque lié d'une façon fixe à un véhicule, ledit système de fixation comportant un boîtier (1), dans lequel est disposé le détecteur de vitesse de rotation et qui est monté sur le support (4) en rotation autour d'un axe de rotation perpendiculaire au plan du support (4), et une pièce d'accouplement, qui a un axe (14), faisant saillie à travers un alésage (13) du support (4) coaxial à l'axe de rotation, lequel axe est guidé dans l'alésage (13) en rotation autour de l'axe de rotation et appuie dans le sens axial, à l'une de ses extrémités, par une pièce d'appui (15), qui s'élargit dans le sens radial, sur l'une des faces latérales du support (4) et, à son autre extrémité, fixe le boîtier (1) en blocage de rotation et est appliqué, dans le sens axial, sur la deuxième face latérale du support (4), **caractérisé par le fait que** l'axe (14) est réalisé, à son extrémité tournée vers le boîtier (1), avec un prolongement qui fait saillie perpendiculairement à l'axe de rotation et s'introduit, perpendiculairement à l'axe de rotation, dans un évidement (9) ménagé dans une paroi du boîtier (1) en s'emboîtant derrière la bordure de l'évidement (9) sur la face de la paroi opposée au support (4), l'évidement (9) ayant, perpendiculairement à l'axe de rotation, une ouverture d'introduction et le boîtier (1) étant appliqué, dans le sens axial par rapport à l'axe de rotation, d'une façon élastique sur le support (4).

2. Système de fixation selon la revendication 1, **caractérisé par le fait que** l'évidement est une fente (9) ouverte du côté d'une bordure latérale du boîtier (1).

3. Système de fixation selon l'une des revendications précédentes, **caractérisé par le fait que** l'axe (14) peut être bloqué dans l'évidement dans sa position de montage.

4. Système de fixation selon la revendication 3, **caractérisé par le fait que** le boîtier (1) a, dans la zone de l'ouverture d'introduction, une languette de fixation (11) faisant saillie dans l'évidement, qui est écartée par l'axe (14), d'une façon élastique, de la zone de l'évidement lorsque l'axe (14) est introduit dans l'évidement.

5. Système de fixation selon l'une des revendications précédentes, **caractérisé par le fait que** le boîtier (1) est une pièce en tôle pliée.

6. Système de fixation selon les revendications 4 et 5, **caractérisé par le fait que** la languette de fixation (11) est réalisée en une seule pièce avec le boîtier (1).

7. Système de fixation selon la revendication 5, **caractérisé par le fait que** des branches de ressort (12) partent du boîtier (1) vers le support (4) et sont, par leurs extrémités libres, appliquées par une force de contrainte sur le support (4).

8. Système de fixation selon la revendication 7, **caractérisé par le fait que** les branches de ressort (12) sont inclinées vers le support (4) en formant un certain angle avec l'axe de rotation.

9. Système de fixation selon l'une des revendications précédentes, **caractérisé par le fait que** le prolongement de l'axe (14) qui fait saillie perpendiculairement à l'axe de rotation est formé par une rainure tangentielle (19), qui s'étend perpendiculairement à l'axe de rotation, ménagée dans la surface d'enveloppe, circulaire dans le sens radial, de l'axe (14).

10. Système de fixation selon la revendication 9, **caractérisé par le fait que** la rainure tangentielle (19) a une largeur supérieure à l'épaisseur de la paroi du boîtier (1) .

11. Système de fixation selon l'une des revendications 2 à 10, **caractérisé par le fait que** la fente (9) a au moins une partie de la paroi qui s'étend perpendiculairement à l'axe de rotation, sur laquelle le fond (20) de la rainure tangentielle (19) s'applique dans la position assemblée de l'axe (14).

12. Système de fixation selon les revendications 9 à 11, **caractérisé par le fait que** l'axe (14) a deux rainures tangentielles (19) parallèles.

13. Système de fixation selon l'une des revendications précédentes, **caractérisé par le fait que** la pièce d'appui (15) de l'axe (14) a, sur sa face opposée au support (14), un évidement de réglage destiné à recevoir un outil de réglage.

14. Système de fixation selon la revendication 13, **caractérisé par le fait que** l'évidement de réglage est une fente (17) perpendiculaire à l'axe de rotation destinée à recevoir un tournevis.

15. Système de fixation selon l'une des revendications précédentes, **caractérisé par le fait qu'**une échelle graduée (18) avec des angles est disposée sur la première face du support (4) en suivant la périphérie de la pièce d'appui (15).

16. Système de fixation selon l'une des revendications précédentes, **caractérisé par le fait que** le boîtier (1) est disposé avec le détecteur de vitesse de rotation sur une carte à circuit imprimé (2) laquelle porte une fiche de raccordement (6) pour le raccordement du capteur de vitesse de rotation, les pistes conductives placées sur la carte à circuit imprimé (2) reliant le détecteur de vitesse de rotation à la fiche de raccordement (6).
